(19)

Europäisches
Patentamt
European
Patent Office
Office européen
des brevets

(11) **EP 3 851 903 A1**

(12) **EUROPEAN PATENT APPLICATION**

(43) Date of publication:
**21.07.2021 Bulletin 2021/29**

(51) Int Cl.:
***G02C 13/00*** *(2006.01)*

(21) Application number: **20305027.3**

(22) Date of filing: **15.01.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **ESSILOR INTERNATIONAL
94220 Charenton-Le-Pont (FR)**

(72) Inventor: **AMIR, Bruno
94220 CHARENTON-LE-PONT (FR)**

(74) Representative: **Ipsilon
Le Centralis
63, avenue du Général Leclerc
92340 Bourg-la-Reine (FR)**

(54) **A METHOD AND SYSTEM FOR PROVIDING AN EYEGLASSES FRAME**

(57) Providing an eyeglasses frame in a fully automatized manner comprises:
(d) obtaining a set of data relating to a 3D representation of the frame, from:
(a) initial information relating to an initial representation of the frame; and
(b) at least one wearer parameter, possibly automatically modified; and
(c) at least one frame parameter, possibly automatically modified; and taking account of at least one constraint or automatically modified constraint, relating to geometry of the frame;
and automatically providing the 3D representation from the obtained set of data;
(e) applying an evaluation criterion to determine whether the 3D representation satisfies the constraint or automatically modified constraint and, if not, (f) iterating obtaining (d) and applying (e) with the automatically modified wearer parameter and/or with the automatically modified frame parameter and/or with the automatically modified constraint, so as to automatically provide a constraint-compliant set of data relating to a final representation of the frame.

FIG. 1

EP 3 851 903 A1

Printed by Jouve, 75001 PARIS (FR)

**Description**

FIELD OF THE DISCLOSURE

The present disclosure relates to a method and system for providing an eyeglasses frame.

BACKGROUND OF THE DISCLOSURE

In the state of the art, customizing an eyeglasses frame usually involves several types of professionals, in addition to the "user" of the eyeglasses frame. The "user" is the person either wearing or using the eyeglasses frame, in other words, a customer who is interested in acquiring customized or personalized glasses.

By way of non-limiting example, those "several types of professionals" may include an eyeglasses frame designer and/or an ophthalmic lens designer and/or a frame manufacturer and/or an ophthalmic lens manufacturer and/or an Eye Care Professional (also referred to as an ECP).

Based on the user's aesthetical and possibly technical preferences, or cost criteria expressed by that user, a number of actions by those professionals and interactions between such professionals generally take place in the process of customization, until the proposed eyeglasses frame is acceptable both for the user and the professionals involved in design, manufacturing and selling.

Sometimes however, the user's requests cannot be satisfied in totality. In worst case, those requests cannot even be satisfied at all.

This may be because the desired eyeglasses frame is not available, because of a prohibitive cost, either for the recasting of available standard frames, or for the adapting, to the customized frame, of a lens having the characteristics of a prescription (correction or tint or any other lens requirement).

In addition, the user may have to wait for a long time before merely being informed of such non-feasibility. Namely, also the ECP often has to wait before either obtaining, from the other professionals concerned by the user's requests, a positive or negative response regarding the technical feasibility of the customized eyeglasses frame desired by the user, or obtaining a response with an eyeglasses frame proposal which does not entirely match all of the user's preferences.

Therefore, it is often very difficult, if not impossible, to determine manually whether all the preferences or requests of the customer can be fulfilled.

Moreover, there is a risk that the final proposal will not be comfortable for the user to wear, because the customization preferences expressed by the user may have proven incompatible with satisfactory ergonomics.

SUMMARY OF THE DISCLOSURE

An object of the disclosure is to overcome the above-mentioned drawbacks of the prior art.

To that end, the disclosure provides a computer-implemented method for providing an eyeglasses frame, wherein it comprises steps of:

(a) obtaining initial information relating to an initial representation of the eyeglasses frame;
(b) obtaining at least one wearer parameter, taken in a group comprising:

- morphological parameters related to a face of a predetermined wearer of the eyeglasses frame; and
- preferred parameters provided by the wearer;

(c) obtaining at least one eyeglasses frame parameter, taken in a group comprising:

- parameters relating to geometry of the eyeglasses frame;
- parameters relating to material of the eyeglasses frame; and
- parameters relating to manufacturing techniques for manufacturing the eyeglasses frame;

(d) obtaining, by at least one processor, a set of data relating to a 3D representation of the eyeglasses frame, from at least:

- the above-mentioned initial information; and
- the obtained at least one wearer parameter or at least one automatically modified wearer parameter; and
- the obtained at least one eyeglasses frame parameter or at least one automatically modified eyeglasses frame parameter; and

- at least one constraint or at least one automatically modified constraint, both relating to geometry of the eyeglasses frame;

and automatically providing the 3D representation of the eyeglasses frame from the obtained set of data;

(e) applying at least one evaluation criterion to the 3D representation of the eyeglasses frame, so as to determine whether the 3D representation of the eyeglasses frame satisfies the at least one constraint;

(f) as long as the 3D representation of the eyeglasses frame does not satisfy at least one constraint among the at least one constraint and the at least one automatically modified constraint, iterating steps (d) and (e) with the at least one automatically modified wearer parameter and/or with the at least one automatically modified eyeglasses frame parameter and/or with the at least one automatically modified constraint,

so as to automatically provide a constraint-compliant set of data relating to a 3D final representation of the eyeglasses frame.

Therefore, the disclosure makes it possible to supply the customer with a customized pair of eyeglasses which is instantaneously designed and calculated in a fully automated manner, even if the customer has asked for a very large number of modifications when being presented successive possible frames. This is because the method according to the disclosure makes it possible to immediately re-calculate all the characteristics of the eyeglasses frame, taking account the customer's requirements and accordingly adapting, where necessary, constraints on the manufacturing processes and materials that may be envisioned for manufacturing the pair of eyeglasses.

As a result, the customer's needs for customization can be fulfilled in a smart, quick and efficient manner.

At the same time, the method takes account of frame creation rules, in the form of the constraint relating to the geometry of the eyeglasses frame, so as to provide, in a fully automated manner, a frame adapted to work as eyeglasses frames destined to be worn by a human user, or derives a non-feasibility, whatever the customizations chosen by the customer.

At the same time, the method takes account of the wearer's morphological parameters for providing, in a fully automated manner, a frame adapted to such morphology. Consequently, the disclosure makes it possible to keep a customized eyeglasses frame comfortable for the wearer, whatever the customization desired by the customer. This is also advantageous because the customer may or may not be the final wearer and the wearer is not necessarily physically present for trying the customized pair of eyeglasses on.

In an embodiment, step (a) of obtaining initial information relating to an initial representation of the eyeglasses frame may comprise generating the initial information by using artificial intelligence.

In an embodiment, at least one of the at least one constraint, mentioned above in relationship with step (d), depends on at least one of the eyeglasses frame parameters.

In an embodiment, at step (e), applying the evaluation criterion may comprise comparing a 2D projection obtained from the initial information with a 2D projection of the 3D representation of the eyeglasses frame, so as to determine whether differences between both projections are below a predetermined threshold.

In an embodiment, such comparing may comprise obtaining differences between said compared 2D projections at at least one predetermined location of the compared 2D projections.

In an embodiment in which the eyeglasses frame has at least one rim portion, the above-mentioned predetermined location may be on the compared respective rim portions of the compared 2D projections.

In an embodiment in which the eyeglasses frame is equipped with at least one ophthalmic lens, the above-mentioned predetermined location may be on the compared respective ophthalmic lenses of the compared 2D projections.

In an embodiment in which the eyeglasses frame has a bridge, the above-mentioned predetermined location may be on the compared respective bridges of the compared 2D projections.

In an embodiment, the above-mentioned comparing of the 2D projection obtained from the initial information with the 2D projection of the 3D representation of the eyeglasses frame may further comprise comparing curvatures of the 2D projections in at least one predetermined area of the eyeglasses frame.

In an embodiment, the above-mentioned comparing of the 2D projection obtained from the initial information with the 2D projection of the 3D representation of the eyeglasses frame may further comprise defining a predetermined number of regions of interest in the 2D projections and comparing corresponding regions of interest of the 2D projections.

The disclosure also provides a system for providing an eyeglasses frame, wherein it comprises:
at least one processor configured for:

(a) obtaining initial information relating to an initial representation of the eyeglasses frame;

(b) obtaining at least one wearer parameter, taken in a group comprising:

- morphological parameters related to a face of a predetermined wearer of the eyeglasses frame; and
- preferred parameters provided by the wearer;

(c) obtaining at least one eyeglasses frame parameter, taken in a group comprising:

- parameters relating to geometry of the eyeglasses frame;
- parameters relating to material of the eyeglasses frame; and
- parameters relating to manufacturing techniques for manufacturing the eyeglasses frame;

(d) obtaining, by the at least one processor, a set of data relating to a 3D representation of the eyeglasses frame, from at least:

- the above-mentioned initial information; and
- the obtained at least one wearer parameter or at least one automatically modified wearer parameter; and
- the obtained at least one eyeglasses frame parameter or at least one automatically modified eyeglasses frame parameter; and
- at least one constraint or at least one automatically modified constraint, both relating to geometry of the eyeglasses frame;

and automatically providing the 3D representation of the eyeglasses frame from the obtained set of data;
(e) applying at least one evaluation criterion to the 3D representation of the eyeglasses frame, so as to determine whether the 3D representation of the eyeglasses frame satisfies the at least one constraint;
(f) as long as the 3D representation of the eyeglasses frame does not satisfy at least one constraint among the at least one constraint and the at least one automatically modified constraint, iterating steps (d) and (e) with the at least one automatically modified wearer parameter and/or with the at least one automatically modified eyeglasses frame parameter and/or with the at least one automatically modified constraint,

so as to automatically provide a constraint-compliant set of data relating to a 3D final representation of the eyeglasses frame.

Not only has the system according to the disclosure the advantages listed above in relationship to the method, but in addition, the system according to the disclosure makes it possible to coordinate with each other the various actors, such as the designers, the manufacturers and the customers, involved in the process of elaborating an eyeglasses frame suited to a given customer. As a result, they may collaborate with one another and each actor may access all the data provided by any of the other actors involved.

The disclosure also provides a computer program product comprising one or more sequences of instructions that are accessible to a processor and that, when executed by the processor, cause the processor to:

(a) obtain initial information relating to an initial representation of the eyeglasses frame;
(b) obtain at least one wearer parameter, taken in a group comprising:

- morphological parameters related to a face of a predetermined wearer of the eyeglasses frame; and
- preferred parameters provided by the wearer;

(c) obtain at least one eyeglasses frame parameter, taken in a group comprising:

- parameters relating to geometry of the eyeglasses frame;
- parameters relating to material of the eyeglasses frame; and
- parameters relating to manufacturing techniques for manufacturing the eyeglasses frame;

(d) obtain, by at least one processor, a set of data relating to a 3D representation of the eyeglasses frame, from at least:

- the above-mentioned initial information; and
- the obtained at least one wearer parameter or at least one automatically modified wearer parameter; and
- the obtained at least one eyeglasses frame parameter or at least one automatically modified eyeglasses frame parameter; and
- at least one constraint or at least one automatically modified constraint, both relating to geometry of the eyeglasses frame;

and automatically provide the 3D representation of the eyeglasses frame from the obtained set of data;
(e) apply at least one evaluation criterion to the 3D representation of the eyeglasses frame, so as to determine whether the 3D representation of the eyeglasses frame satisfies the at least one constraint;

(f) as long as the 3D representation of the eyeglasses frame does not satisfy at least one constraint among the at least one constraint and the at least one automatically modified constraint, iterate steps (d) and (e) with the at least one automatically modified wearer parameter and/or with the at least one automatically modified eyeglasses frame parameter and/or with the at least one automatically modified constraint,

so as to automatically provide a constraint-compliant set of data relating to a 3D final representation of the eyeglasses frame.

The disclosure also provides a non-transitory information storage medium, wherein it stores one or more sequences of instructions that are accessible to a processor and that, when executed by the processor, cause the processor to:

(a) obtain initial information relating to an initial representation of the eyeglasses frame;
(b) obtain at least one wearer parameter, taken in a group comprising:

- morphological parameters related to a face of a predetermined wearer of the eyeglasses frame; and
- preferred parameters provided by the wearer;

(c) obtain at least one eyeglasses frame parameter, taken in a group comprising:

- parameters relating to geometry of the eyeglasses frame;
- parameters relating to material of the eyeglasses frame; and
- parameters relating to manufacturing techniques for manufacturing the eyeglasses frame;

(d) obtain, by at least one processor, a set of data relating to a 3D representation of the eyeglasses frame, from at least:

- the above-mentioned initial information; and
- the obtained at least one wearer parameter or at least one automatically modified wearer parameter; and
- the obtained at least one eyeglasses frame parameter or at least one automatically modified eyeglasses frame parameter; and
- at least one constraint or at least one automatically modified constraint, both relating to geometry of the eyeglasses frame;

and automatically provide the 3D representation of the eyeglasses frame from the obtained set of data;
(e) apply at least one evaluation criterion to the 3D representation of the eyeglasses frame, so as to determine whether the 3D representation of the eyeglasses frame satisfies the at least one constraint;
(f) as long as the 3D representation of the eyeglasses frame does not satisfy at least one constraint among the at least one constraint and the at least one automatically modified constraint, iterate steps (d) and (e) with the at least one automatically modified wearer parameter and/or with the at least one automatically modified eyeglasses frame parameter and/or with the at least one automatically modified constraint,

so as to automatically provide a constraint-compliant set of data relating to a 3D final representation of the eyeglasses frame.

As the computer program product and the non-transitory information storage medium have advantages similar to those listed above in relationship to the method and the system, those advantages are not repeated here.

BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.

FIG. 1 is a flowchart showing steps of a method for providing an eyeglasses frame according to the disclosure, in a particular embodiment.
FIG. 2 is a schematic view of a system for providing an eyeglasses frame according to the disclosure, in a particular embodiment.
FIG. 3 is a schematic view of a non-limiting example of an eyeglasses frame that may be provided by a method according to the disclosure, in a particular embodiment.
FIG. 4 is a schematic view of two superimposed 2D projections of eyeglasses frames to be compared according to the method of the disclosure, the geometry of the eyeglasses frames being simplified in the drawing for better understanding the disclosure.

FIG. 5 is a schematic view of two 2D projections of eyeglasses frames according to the method of the disclosure.

FIG. 6 is a schematic view of a non-limiting example of a curvature diagram of a half outer frame shape, used in the method of the disclosure, in a particular embodiment.

FIG. 7 is a schematic view of different sizes of the same frame design as in Figure 6, the different sizes being obtained by using the curvature diagram of Figure 6 in the method according to the disclosure, in a particular embodiment.

FIG. 8 is a schematic view of two eyeglasses frames having different nose fit obtained by using the method according to the disclosure, in a particular embodiment.

FIG. 9 is a schematic view showing a non-limiting example of a tool for making it possible for a customer to enter customization preferences into a design database comprised in a system for providing an eyeglasses frame according to the disclosure, in a particular embodiment.

FIG. 10 is a schematic view of a non-limiting example of a list of various models of eyeglasses frames proposed to the customer in accordance with the customer's customization preferences previously entered by the customer using the tool of Figure 9.

FIG. 11 is a schematic view of a system for providing an eyeglasses frame according to the disclosure, in a particular embodiment.

## DETAILED DESCRIPTION OF THE DISCLOSURE

In the description which follows, although making and using various embodiments are discussed in detail below, it should be appreciated that as described herein are provided many inventive concepts that may embodied in a wide variety of contexts. Embodiments discussed herein are merely representative and do not limit the scope of the disclosure. It will also be obvious to one skilled in the art that all the technical features that are defined relative to a process can be transposed, individually or in combination, to a device and conversely, all the technical features relative to a device can be transposed, individually or in combination, to a process and the technical features of the different embodiments may be exchanged or combined with the features of other embodiments.

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises", "has", "contains", or "includes" one or more steps or elements possesses those one or more steps or elements, but is not limited to possessing only those one or more steps or elements.

The processor(s) within the terms of the disclosure may comprise dedicated hardware as well as hardware capable of executing software in association with appropriate software. This may consist in a single dedicated processor, a single shared processor, or a plurality of individual processors, some of which may be shared. Moreover, explicit use of the term "processor" should not be construed as referring exclusively to hardware capable of executing software, but refers in a general way to a processing device, which can for example include a computer, a microprocessor, an integrated circuit, or a programmable logic device (PLD). Additionally, the instructions and/or data enabling to perform associated and/or resulting functionalities may be stored on any processor-readable medium such as e.g. an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

A computer-implemented method according to the disclosure is for providing an eyeglasses frame. The method comprises several main phases: design creation, design selection, design modification and possibly frame manufacturing.

In a particular embodiment, the method according to the disclosure provides in a fully automated manner a fully or partially customized eyeglasses frame to a human individual.

As a non-limiting example, the individual may be a customer who intends to order or orders and/or who intends to purchase or purchases an eyeglasses frame after customizing the same. The individual may make the order or purchase, either for himself/herself (the individual may thus be the eyeglasses wearer himself/herself), or for someone else, after having such eyeglasses frame customized for the other person.

The order or purchase may take place in a physical i.e. real shop or store, where the method according to the disclosure runs on a computer, tablet, smartphone or on any other electronic device. As a variant, the individual may order and/or may purchase the eyeglasses 100% online i.e. on the Internet, without any assistance from an ECP.

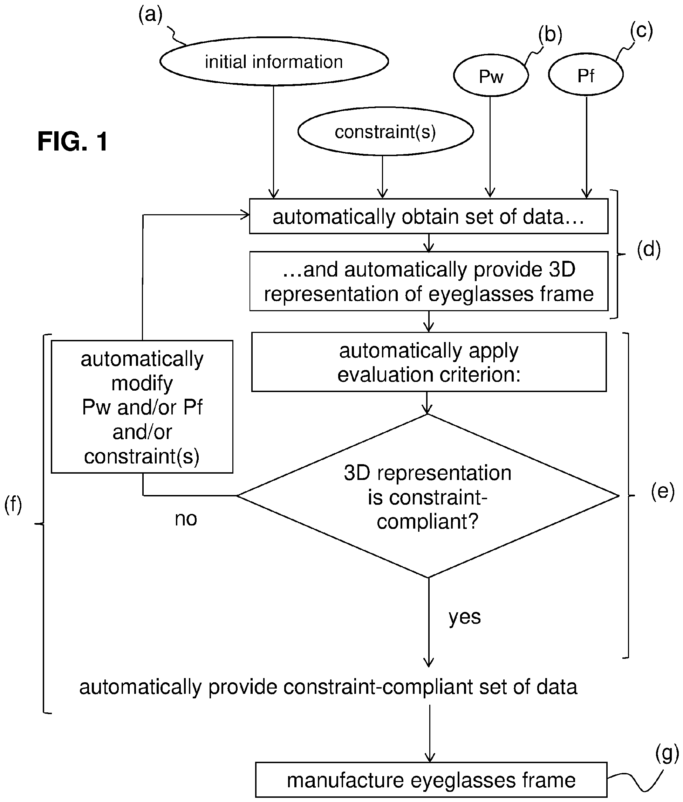

Referring to the flowchart of Figure 1, in a particular embodiment, the method according to the disclosure comprises steps (a) to (g) that are detailed below. Steps (a), (b) and (c) may be carried out in any order, including at least partly simultaneously.

The method according to the disclosure comprises step (a) of automatically obtaining initial information relating to an initial representation of an eyeglasses frame to be provided.

By way of non-limiting example, such "initial information" may be retrieved from an existing eyeglasses frame or may be a two-dimension (hereafter referred to as "2D") sketch of an eyeglasses frame, such sketch having been made by a human eyeglasses frame designer directly in electronic form, either for a part of the sketch or for the entirety thereof, e.g. on a computer and/or tablet and/or smartphone or any other electronic device.

As another possibility, the 2D sketch of the eyeglasses frame may have been made by the designer on a piece of paper with a pen or any other non-virtual writing, drawing or painting tool and may have been scanned or otherwise converted into a set of digital data, such set of data being contained in a permanent or temporary file that may be contained in a database, on a hardware electronic device or on a telecommunications network such as the Internet, e.g. in the cloud. In other words, the above-mentioned step of obtaining the initial information may comprise retrieving that initial information from a database.

As still another possibility, the sketch may be a three-dimension (hereafter referred to as "3D") representation of the frame of the eyeglasses, such as a provisional or final version of a prototype of the frame conceived or provided by the frame designer, or a provisional or final version of a shape of the frame conceived or provided by the frame designer, or a provisional or final version of a model of the frame conceived or provided by the frame designer. Such 3D sketch may for example be available on a Computer-Aided or Computer-Assisted Design (CAD) tool, or it may be the result of a manufacturing process, e.g. a process involving conventional and/or additive manufacturing.

In still another embodiment, step (a) of obtaining the above-mentioned initial information may comprise generating the initial information by using artificial intelligence or machine learning. For example, a neural network may be appropriately trained e.g. by human designers or ECPs and it may then be used for automatically sketching original eyeglasses frames, based on previously learnt frame designs.

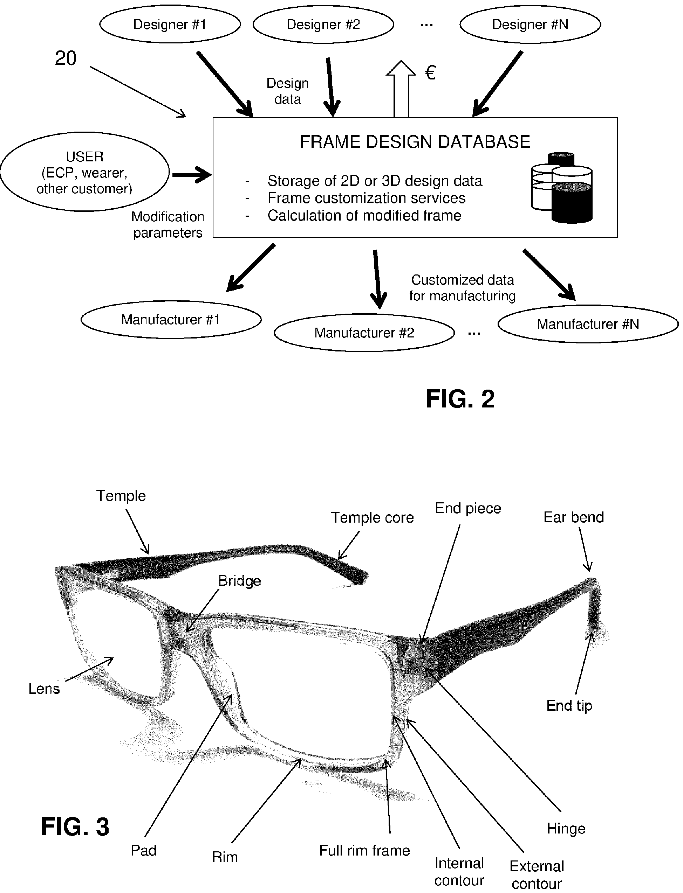

In step (a), by way of non-limiting example, by automatically receiving data e.g. from a database 20 (see below description of the system according to the present disclosure in particular with reference to Figure 2), or by automatically downloading or otherwise retrieving data from the database 20, the method according to the disclosure obtains as "initial information" a set of data relating to the 2D sketch, or a set of data relating to a 2D projection of the sketch in case the sketch is tridimensional (hereafter referred to as "3D").

The initial information may be obtained or provided in various standard formats of data files such as IGES for geometry data, SVG or PDF (vectorial), AI (Adobe® Illustrator®) or STEP.

As shown in Figure 2, the designer may upload the design into a database such as the database 20, which may be filled by hundreds or thousands of designers. Each designer may thus propose different designs which will then be offered to users (ECPs, or wearers online, or any other customers, such as eyewear manufacturers, including frame and lens manufacturers).

As illustrated by the "€" arrow in Figure 2, the eyeglasses frame designers can get money back from users or from eyewear manufacturers for instance, or from the manager of the database 20.

In addition, thanks to the system for providing an eyeglasses frame according to the disclosure in a particular embodiment, some specific services may be provided to the human designer, such as:

- one or more solutions for comparing his/her new designs to existing designs, so that it is not possible to upload a design for which too many similarities exist with a previously uploaded design;
- one or more solutions for enabling the designer to modify his/her uploaded design, so as to adjust according to trends or according to feedback from wearers;
- services for getting feedback from wearers, so that wearers can rank the design (for instance, about comfort or about aesthetics) or give recommendations. Thus, the designer may evaluate the relevance of his/her design and adapt/modify it according to wearers' feedback;
- services for providing the designer with a list of manufacturers that are able to manufacture the eyeglasses frame according to the design specifications;
- etc.

optionally, the initial representation of the eyeglasses frame may be made available to the user (an ECP, or a wearer, or any other customer) via a database, such as the frame design database 20 shown in Figure 2. The database may be accessed remotely. Thus, the user may express preferences for obtaining a design which best answers his/her needs, for example based on aesthetics and/or ergonomics considerations.

By way of non-limiting example, the initial representation of the eyeglasses frame may comprise the design of the front face of the frame.

Optionally, in step (a), a design of the temple or of the hinge of the eyeglasses frame may also be proposed by the human or virtual designer. In this respect, reference may be made to self-explanatory Figure 3 which illustrates a non-limiting example of a temple and of a hinge of an eyeglasses frame. In a variant, if absent from the representation of the eyeglasses obtained in step (a), the design of the temple or of the hinge of the eyeglasses frame may be automatically determined in the steps (c) or (d).

In an embodiment, different eyeglasses frame designers may propose eyeglasses frame models, which they may upload in a database such as the frame design database 20 as soon as the considered model is complying with aesthetics and comfort rules which may have been previously uploaded in the database 20.

The method according to the disclosure also comprises a step (b) of obtaining at least one wearer parameter Pw, that is to say, one or more parameters related to the person wearing the eyeglasses. Namely, the design of the eyeglasses frame can be customized according to various parameters.

The wearer parameter(s) may be taken among the following ones:

- morphological parameters related to a face of a predetermined wearer of the frame, for example face morphology, possibly including head size at the location of the ear and/or at the location of the orbit and/or possibly including eyebrow position, cheekbones, nose size, hair or skin color, etc.; such morphological parameters may be obtained for example by using a photo provided by the us, or by performing 3D face scanning of the wearer if the wearer is either present physically or equipped with an image capture device; and
- preferred parameters provided by the user (ECP, wearer or any other customer), i.e. parameters given by the user as a contribution for customizing the eyeglasses frame.

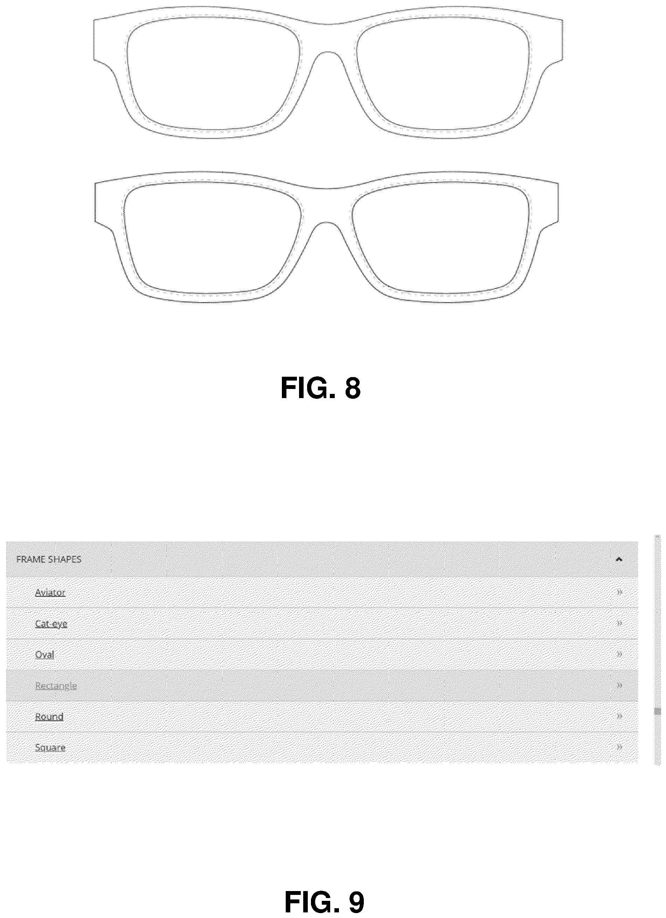

By way of non-limiting example, the preferred parameters provided by the wearer, or more generally by any user, may be taken in a group comprising parameters relating to the general look, style, shape (e.g. rectangular, square, circular, oval, cat-eye, butterfly, aviator, classical... see examples of proposed frame shapes in Figure 9), material and color of the eyeglasses frame.

Optionally, the type of lenses to be fitted in the eyeglasses frame may also be taken into account for customizing the frame.

The method according to the disclosure also comprises a step (c) of obtaining at least one eyeglasses frame parameter Pf, that is to say, one or more parameters regarding the frame.

The frame parameter(s) may be taken among the following ones:

- parameters relating to geometry of the eyeglasses frame;
- parameters relating to material of the eyeglasses frame; and
- parameters relating to manufacturing techniques for manufacturing the eyeglasses frame.

By way of non-limiting example, the frame parameters may relate to the front face of the eyeglasses frame and may thus include one or more geometrical features of the frame face, such as:

- the shape and/or position of the internal contour of the frame face or the lens shape geometry, at least 2D;
- the shape and/or position of the external contour of the frame face, which may be the same as the internal contour if the eyeglasses frame is rimless;
- the nose geometry and position;
- the edge thickness, which is related to the difference between the internal and external contours of the frame;
- the end piece position (a non-limiting example of an end piece is shown in Figure 3).

The frame parameters may also relate to the material of the frame face or to some decorative features of the frame, such as:

- a color pattern or a list of colors;
- a texture or a list of textures;
- transparency or opacity of the frame;
- the material(s) to be used;
- the pad geometry (see non-limiting example of pads shown in Figure 3);
- the geometry and/or material and/or decorative features for the temple shape;
- the shape of the hinges of the frame and/or their position in height (see non-limiting example of hinges in Figure 3);
- a list of available eyeglasses frame modifications (type and range of values), such as a list of available color patterns, a list and range of values of possible deformations (pantoscopic angle, wrap angle, edge thickness range, shape deformation percentage or deformation range, etc.;
- a list of geometrical constraints, such as a continuity order 0, 1 or 2, or a zone with no or little geometric deformation;

- the designer name, the name of the eyeglasses frame, a brand name, elements concerning the frame style;
- a metal insert, a chamfer on the outer edge, bevels, etc.

The frame parameters may be automatically determined using at least one processor, from the initial representation of the eyeglasses obtained in step (a).

Similar sets of initial information may be stored, but with some parameter variation, for example a set of eyeglasses frame faces having the same aesthetic aspect, but different sizes in order to adapt to different head widths (male, female, children...).

The method according to the disclosure also comprises, after steps (a), (b) and (c), a step (d) of automatically obtaining, by at least one processor, a set of data relating to a 3D representation of the eyeglasses frame, from at least:

- the above-mentioned initial information; and
- the obtained at least one wearer parameter Pw or at least one automatically modified wearer parameter; and
- the obtained at least one eyeglasses frame parameter Pf or at least one automatically modified eyeglasses frame parameter; and
- at least one constraint or at least one automatically modified constraint, both relating to geometry of the eyeglasses frame;

and automatically providing the 3D representation of the eyeglasses frame from the obtained set of data.

In the present disclosure, the term "variable" refers to a parameter that is automatically modified by the proposed method. Thus, some parameters are constants, other parameters are variables and some parameters are bound to others, the modification of those parameters automatically causing modification of the parameters bound thereto.

The system may make use of a set of parameters, some of which have a value provided during steps (b) or (c); all other parameters may have values automatically assigned during step (d). The set of parameters thus determined may then be used in step (d) to form said 3D representation of the eyeglasses frame.

The 3D representation of the eyeglasses frame automatically provided at step (d) is not necessarily related to a display. Similarly to the initial representation of the eyeglasses frame, it may take many other forms. By way of non-limiting example, it may be a file automatically processed by the at least one processor and containing a set of data relating to the 3D representation of the eyeglasses frame provided at step (d), a shape or model of the frame, a prototype possibly automatically manufactured by using additive manufacturing, etc.

At step (d), optionally, the obtaining the above-mentioned set of data further takes account of at least one additional constraint relating to manufacturing techniques.

In an embodiment, at least one of the at least one constraint may depend on at least one of the eyeglasses frame parameters Pf.

Following step (d), the method according to the disclosure also comprises a step (e) of applying at least one evaluation criterion to the 3D representation of the eyeglasses frame, so as to determine whether the 3D representation of the eyeglasses frame satisfies the above-mentioned at least one constraint.

In an embodiment, the constraint may be related to rules enabling to have a wearable eyeglasses frame wearable by a generic human wearer. In a further embodiment, at least one of the constraints may be related to rules enabling to have a wearable eyeglasses frame wearable by a predetermined wearer.

In a further embodiment, at least one of the constraints may be related to rules checking a resemblance between the obtained 3D representation of the frame and the initial representation of the frame.

Thus, in a particular embodiment, the evaluation criterion is related to a resemblance or, conversely, to a deviation between the 3D final representation of the frame and the initial representation of the frame.

In an embodiment, applying the at least one evaluation criterion may comprise comparing a 2D projection obtained from the above-mentioned initial information with a 2D projection of the 3D representation, so as to determine whether differences between both projections are below a predetermined threshold.

In various embodiments which may or may not be combined into one and the same embodiment, such comparing process may comprise obtaining differences between the compared 2D projections as follows:

- at at least one predetermined location of the compared 2D projections; and/or
- at at least one curvature in at least one predetermined region of interest of the compared 2D projections; and/or
- based on a derivate of the at least one curvature.

In an embodiment, modifying the constraint relating to the geometry of the eyeglasses frame may automatically modify the comparing of the curvature depending on the predetermined regions of interest.

In an embodiment in which the eyeglasses frame has a front face which has an internal contour and an external contour, the above-mentioned predetermined location may be on the compared respective internal and/or external contours of the respective front faces of the compared 2D projections.

In an embodiment in which the eyeglasses frame has at least one rim portion, the predetermined location may be on the compared respective rim portions of the compared 2D projections.

Non-limiting examples of a rim and of other parts of an eyeglasses frame are illustrated in self-explanatory Figure 3. This exemplifies the well-known terminology of eyeglasses frames that is used throughout the present disclosure,

In an embodiment in which the eyeglasses frame is equipped with at least one lens (see Figure 3) or ophthalmic lens, the predetermined location may be on the compared respective lenses or ophthalmic lenses of the compared 2D projections.

In an embodiment in which the eyeglasses frame has a bridge as shown in Figure 3, the predetermined location may be on the compared respective bridges of the compared 2D projections.

In an embodiment, the comparing of the 2D projection obtained from the above-described initial information with the 2D projection of the above-described 3D representation may further comprise comparing curvatures of the 2D projections in at least one predetermined area of the eyeglasses frame.

In an embodiment, the comparing of the 2D projection obtained from the above-described initial information with the 2D projection of the above-described 3D representation may further comprise defining a predetermined number of regions of interest in the 2D projections and comparing corresponding regions of interest of the 2D projections.

In an embodiment, the comparing of the 2D projection obtained from the above-described initial information with the 2D projection of the above-described 3D representation may further comprise assigning respective predetermined weights to predetermined locations of interest. The weights may depend on the at least one constraint or the at least one automatically modified constraint or on the preferred parameters provided by the wearer, pertaining to the wearer parameters Pw. The weights are then taken into account when determining whether differences between both projections are below the above-mentioned predetermined threshold.

As a variant, the frame may be customized based on an optimization of the design, starting from the initial representation of the eyeglasses frame and giving design targets and design constraints and then modifying frame parameters so that the final design is as close as possible to the design targets and respects design constraints.

Then, in a step (f), as long as the 3D representation of the eyeglasses frame automatically provided at step (d) does not satisfy at least one constraint among the at least one constraint and the at least one automatically modified constraint, the method according to the disclosure comprises iterating steps (d) and (e) with the at least one automatically modified wearer parameter and/or with the at least one automatically modified eyeglasses frame parameter and/or with the at least one automatically modified constraint, so as to automatically provide a constraint-compliant set of data relating to a 3D final representation of the eyeglasses frame.

In an embodiment in which the eyeglasses frame has a front face which has an internal contour, an external contour and in which a new intermediate contour results from step (f), the predetermined location may be on said compared respective intermediate contours of the compared 2D projections.

The user may be presented the 3D representation of the eyeglasses frame in such a manner that he may virtually try on the frame, in order to decide whether the provided frame is satisfactory for him/her.

In a particular embodiment, step (f) may also comprise further modifying the eyeglasses frame upon request from a user, in addition to the modifications resulting from the preferences that may have been initially expressed by that user. This will be the case for example if the user does not find the provided frame satisfactory.

At customization steps (d) to (f), a very large number of the parameters can be customized. Nevertheless, aesthetics and comfort need to be preserved.

The technical parameters that can be changed are at least the following:

- all geometrical frame parameters, color patterns, material, etc., provided modifications are within the ranges of values authorized by the design data;
- frame shape: internal or external contour, B size, A size, D size... (the definition of such dimensions being known in the art);
- pantoscopic angle of the eyeglasses frame;
- form angle of the frame face (the definition of the form angle is given for example in standard ISO 8624);
- base curve;
- local/global edge thickness (in height);
- transparency, opacity and color of frame;
- inclination of temples (horizontal/vertical)
- bridge height;
- nose shape, pad shape.

The above modifiable parameters, which are variables, are not necessarily visible to the user, who may instead select a preference of the type "more relax/more serious design". In that example, "more relax" may correspond to a round shape, whereas "more serious" would correspond to a rectangle. A preference of the type "more/less visible eyewear" may correspond to a modification of the edge thickness or of the transparency or color of the frame.

This is also advantageous for users who are not used to formulate their needs in a technical way.

In an embodiment where, at step (e), applying the evaluation criterion comprises comparing 2D projections, the frame may be customized by modifying the technical thereof while keeping the 2D projection of the frame face identical or with little change. That embodiment ensures that the frame design will remain globally unchanged, while permitting some level of customization, and that the comfort of wearing the frame will not be decreased.

Thus, in such an embodiment, starting from the initial frame design i.e. the initial information relating to the initial representation of the eyeglasses frame, which corresponds to the initial selection of the user, a 2D projection of the front face of the eyeglasses frame is extracted.

Then, the initial frame may be modified according to the parameters desired by the user to be modified.

For example, the user may wish to obtain a frame fitting his/her face. In such a case, the face form angle may be optimized, for better adapting to the user's face morphology and the pantoscopic angle may be optimized, also for better adapting to the user's face morphology, in order to prevent interference with the cheekbone for example. The pads or an internal angle of the nose region of the frame may also be optimized for better fitting the wearer's nose.

The user may also wish to obtain a frame with increased visibility. In such a case, the thickness of the rims of the frame may be modified, in particular at the temporal or nasal edges of the rim of the frame, so that the edge thickness of the lens and the edge thickness of the frame are similar. The eyewear base curve may also be modified so that the lens edge fits the rim of the frame, or so as to reduce the base curve difference between the lens and the rim of the frame.

The user may also wish to ensure that the frame temple will close correctly even when the lens is thick, i.e. there should be no interference between temple and lens edge. In such a case, the position in height of the hinge on the frame may be modified.

Therefore, at step (f), the initial design is modified according to the parameters that have to be changed, but the projection in a 2D plane (for instance a vertical 2D plane or the best plane containing the front face of the frame) is kept similar.

A non-limiting example of calculation that may be made at step (f) is given below.

From the IGES model, a list of curves (Cini3D, i) is extracted.

(Cini2D, i), i = 1,...,N is the list of 2D curves in a plane P.

(Cfinal3D, i), i =1,...,N is the list of 3D curves of the final face eyeglasses frame, after modification.

(Cfinal2D, i) i = 1,...,N is the list of 2D curves which are the 2D projection of the (Cfinal3D, i) i = 1,...,N curves in the plane P.

The absolute value of the maximal deviation between each (Cfinal2D, i) and (Cini2D, i) i = 1,...,N curves should be less than a threshold alpha.

This is an evaluation criterion based on similarity or dissemblance between the initial and final 2D projections.

One way to achieve this is to sample each curve:
(Xini3D, i; Yini3D, i; Zini3D, i) i=1,...,N is the list of 3D coordinates of the initial frame face design.

Those coordinates are projected in a plane P:
(Xini2D, i; Yini2D, i) i=1,...,N is the list of 2D coordinates in the plane P.

(Xfinal3D, i; Yfinal3D, i; Zfinal3D, i) i=1,...,N is the list of 3D coordinates of the final face eyewear (after modifications).

(Xfinal2D,i ;Yfinal2D,i) i=1..N list of 2D coordinates in the plane P for the final frame face design.

Then, within the list of coordinates, the coordinates that are representative of the design are extracted, i.e. the coordinates that give the eyeglasses frame internal or external contour or edge:
(Xini2D,k ; Yini2D,k) k=k1,k2,...,kn

(XFinal2D,k ; YFinal2D,k) k=k1,k2,...,kn

Then, for each coordinate (Xini2D,k;Yini2D,k), the closest coordinates (Xfinal2D,j,Yfinal2D,j) are taken in the list (Xfinal2D,k,YFinal2D,k).

The initial 3D design is changed so that it is obtained, for every k=k1,...,kn :

$$[(\text{Xfinal2D,j} - \text{Xini2D,k})^2 + (\text{Yfinal2D,j} - \text{Yini2D,k})^2] < \text{alpha} \ (\text{Xini2D,k}^2 + \text{Yini2D,k}^2)$$

The evaluation criterion based on such distance gives an acceptable difference between the 2D final projection and the 2D initial projection. Typically, it is less than 10%, preferably 5%, more preferably 2.5%.

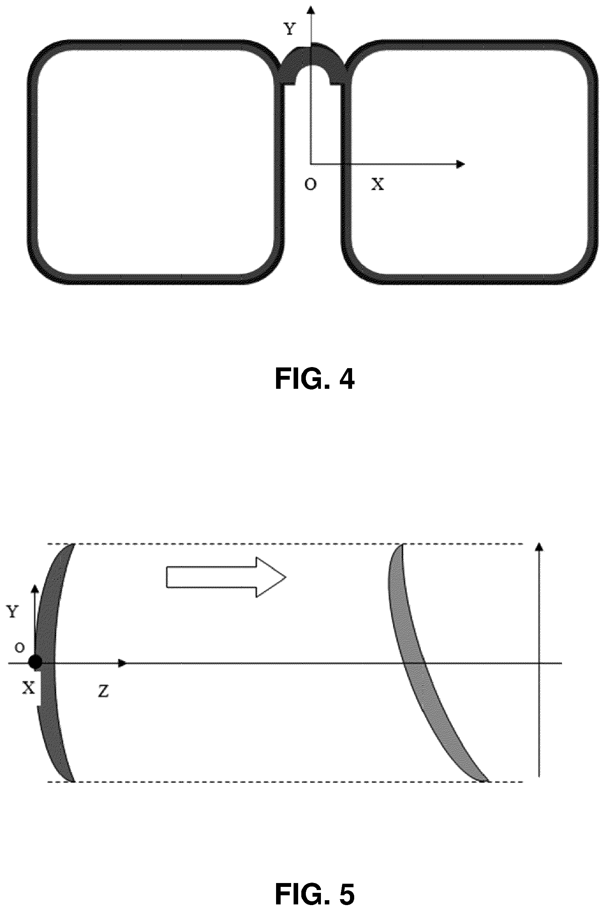

Figure 4 illustrate a non-limiting example where the 2D projection remains almost unchanged after 3D frame modifications of the pantoscopic angle. Namely, the 2D final projection is shown in Figure 4 by a slightly darker portion on the outer edge or contour of the frame.

Figure 5 shows a non-limiting example of the 2D projections with a modification of the pantoscopic angle as well. The 2D plane is (O, X, Y) and is vertical.

Moreover, at steps (d), (e) and (f), at least one constraint is used for frame customization, through optimization of parameters relating to the geometry of the frame, with a defined target corresponding to the modification wanted and with constraints corresponding to the eyewear parameters that are to be preserved.

In such case, the comparing process of the above example may be applied, modulated by the at least one customization constraint, such that the projection in a 2D plane (for instance a vertical 2D plane or the best plane containing the front face of the frame) is kept similar, save for one or more specific regions or parameters which are evaluated according to a different criterion.

Below are non-limiting examples of the target parameter Target M=1,...,m:

- the face form angle of the frame,
- the pantoscopic angle,
- the A size, or B size,
- the base curve for the frame shape,
- the contour or edge thickness, Z thickness i.e. thickness in height,
- the geometry of the rim, which will hold the lens bevel,
- the hinge position (X, Y, or Z i.e. horizontal in length or width, or vertical)

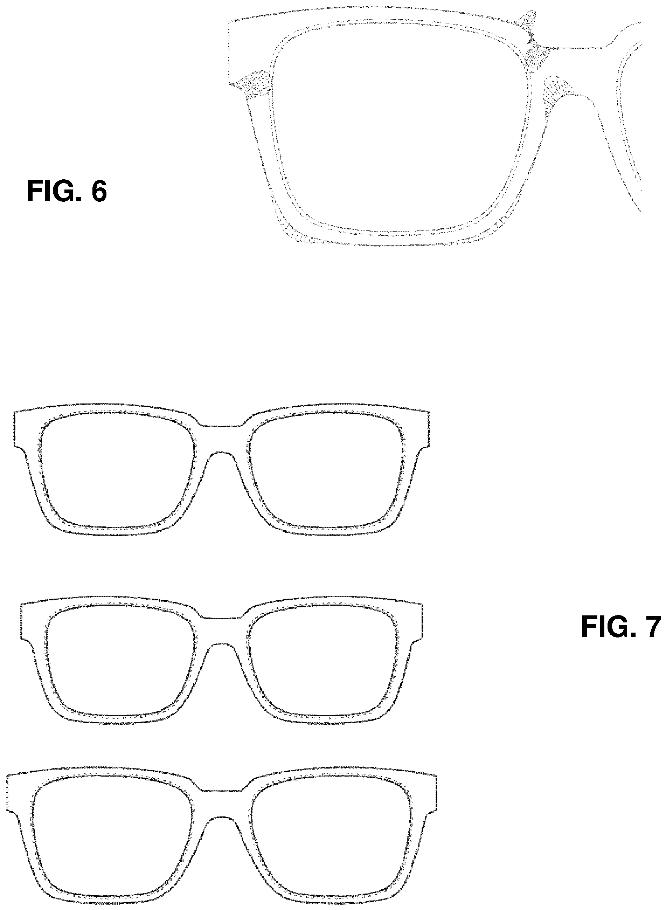

A non-limiting example of a constraint is as follows: in order to preserve the face global design, we need for a set of locations in the eyeglasses frame to preserve the slope or curvature variation, for the internal or external frame shape. In this respect, Figure 6 illustrates the curvature diagram of the half external frame shape.

Thanks to the method and system of the disclosure, the size of the frame may be modified while keeping the same design, as illustrated by Figure 7, which shows three different sizes of the same frame design.

Another example of a constraint is as follows: in order to preserve comfort, the 2D or 3D nose shape should be modified to fit constraints, or slightly modified (width or height, splay angle). Figure 8 shows two eyeglasses frames differing only by the nose fit (Caucasian in the frame on top of the drawing and Asian on the bottom part of the drawing). In such case, the comparing process of the example above is applied, modulated by a constraint, such that the projection in a 2D plane (for instance a vertical 2D plane or the best plane containing the front face of the frame) is kept similar, save for the nasal region which is evaluated according to a different criterion.

Another example of a constraint is as follows: in order to provide good aesthetics, eyewear robustness, as well as ease of use:

- the Z thickness should not be too thin (more than 50% of the initial thickness) or too thick (more than twice the initial thickness),
- or it should be ensured that the thickness is between 2.5mm and 7mm,
- the hinge Z position should not be more than 15 mm from the face eyewear, preferably <10mm

Another example of a constraint is as follows:

- to permit good lens fitting:
- the rim geometry must allow the lens bevel to fit inside: typically, the rim width should be at least 1mm, the rim angle should be no more than 120°.

For carrying out the eyeglasses frame optimization, a 3D model using a set of faces may for instance be used.

A face can be a NURBS surface (for example defined by its control points or its points of the surface) or a mesh.

Each of the faces can be modified using an optimization procedure:

F designates the faces of the eyewear geometry.

The faces F are such that the constraint parameters are respected.

The faces F are such that the eyewear reaches the target, or is as close as possible to the target.

Following step (f), the method according to the disclosure may optionally comprise an additional step (g) of manufacturing the eyeglasses frame from the constraint-compliant set of data.

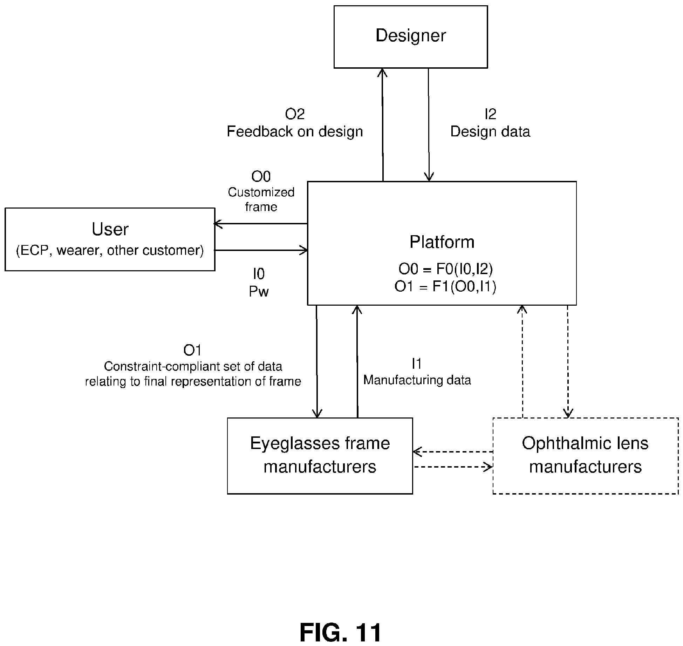

A system according to the present disclosure will now be described with reference to Figures 2, 9, 10 and 11. Although Figures 2 and 11 are quite similar, the embodiment illustrated by Figure 11 is meant to more particularly show all the data involved and relationships between the same and the main beneficial aspects of a platform for sharing and exchanging data, whereas Figure 2 focuses on the basic functionalities of the system, namely, storing 2D or 3D design data, providing services for eyeglasses frame customization and calculating modified eyeglasses frames in a fully automated and instantaneous manner.

Indeed, the system for providing an eyeglasses frame according to the present disclosure may be implemented or integrated as a part of a more global assembly taking e.g. the form of a platform, which makes it possible for various actors such as the users (customers wishing to acquire customized eyeglasses, ECPs, eyeglasses wearers, etc.), the eyeglasses frame designers, the eyeglasses frame manufacturers and possibly the lens manufacturers, to upload and download information and to benefit from the actions made by other actors via the platform.

Such a system according to the present disclosure is for providing an eyeglasses frame. Similarly to the method described above in detail, the system comprises:

at least one processor configured for:

(a) obtaining initial information relating to an initial representation of the eyeglasses frame;
(b) obtaining at least one wearer parameter, taken in a group comprising:

- morphological parameters related to a face of a predetermined wearer of the eyeglasses frame; and
- preferred parameters provided by the wearer;

(c) obtaining at least one eyeglasses frame parameter, taken in a group comprising:

- parameters relating to geometry of the eyeglasses frame;
- parameters relating to material of the eyeglasses frame; and
- parameters relating to manufacturing techniques for manufacturing the eyeglasses frame;

(d) obtaining, by the at least one processor, a set of data relating to a 3D representation of the eyeglasses frame, from at least:

- the initial information; and
- the obtained at least one wearer parameter or at least one automatically modified wearer parameter; and
- the obtained at least one eyeglasses frame parameter or at least one automatically modified eyeglasses frame parameter; and
- at least one constraint or at least one automatically modified constraint, both relating to geometry of the eyeglasses frame;

and automatically providing the 3D representation of the eyeglasses frame from the obtained set of data;
(e) applying at least one evaluation criterion to the 3D representation of the eyeglasses frame, so as to determine whether the 3D representation of the eyeglasses frame satisfies the at least one constraint;
(f) as long as the 3D representation of the eyeglasses frame does not satisfy at least one constraint among the at least one constraint and the at least one automatically modified constraint, iterating steps (d) and (e) with the at least one automatically modified wearer parameter and/or with the at least one automatically modified eyeglasses frame parameter and/or with the at least one automatically modified constraint,

so as to automatically provide a constraint-compliant set of data relating to a 3D final representation of the eyeglasses frame.

Referring to Figure 11, a platform implements the system of the present disclosure in a particular embodiment.

An advantage of such a platform is to put in contact with one another eyeglasses frame designers, frame and possibly lens manufacturers, and users (including ECPs, wearers and other customers), by creating a 3D representation or model of a customized eyeglasses frame, starting from (i) an initial design, which is in the form of initial information relating to a representation of the frame, and (ii) client data F0, and specifying the 3D model with respect to manufacturing characteristics F1.

I0 designates the client's inputs regarding the client's needs and client data.

I1 designates the inputs from the frame manufacturers.

I2 designates the design data input from the designers.

The designer benefits from the platform because he shares his "usual" design data as 2D or 3D sketches and receives in return feedback on those designs from the users of the platform or even a suggested list of possible changes associated with a given design. Those returned data are referred to as O2, which is the output of function F2.

For example, starting from an initial design uploaded by the designer, the platform may propose to the designer recommendations about possible changes to be made in the frame that may increase acceptance by the user: from previously downloaded frame designs, the platform may identify similar designs and the most common modifications required by users. For instance, such most common modifications may be requests for a specific color, or for a thicker frame edge.

The platform may also check that the designer inputs some criteria for manufacturing feasibility, or for having too high similarity with another design in the database where the designs have been uploaded by the designer.

For example, the platform may give feedback to the designer about the manufacturing cost and feasibility of the design and may advise about some changes to limit costs and ensure feasibility by most frame manufacturers.

Such feedback may in particular be done by applying a subroutine with the calculation of a 3D representation process and subsequent criterion-based evaluation according to the disclosure to each applied design. The 3D representation and its comparison to other criteria or the number of possible iterations of steps (d) and (e) or other elements may be used to give feedback to the designers on for example the feasibility or possible manufacturing cost or originality, or possible attractiveness or acceptable customization of their design.

The user benefits from the platform because the latter provides the user with a large choice of customizable eyeglasses frames, by providing a large choice of initial eyeglasses frames and providing the automated software engine to enable a customization by the user, and ensures that the pair of eyeglasses thus customized will be both aesthetical and comfortable and able to be mounted with optical lenses, as explained previously in relationship with the method of the disclosure.

As described in detail previously in relationship with the method, the user may provide preferences for customization. The user may also provide additional data such as a prescription or a lens type (clear, photochromic...).

According to the user's preferences, a list containing at least one customizable frame is created. The user can choose a model in the list.

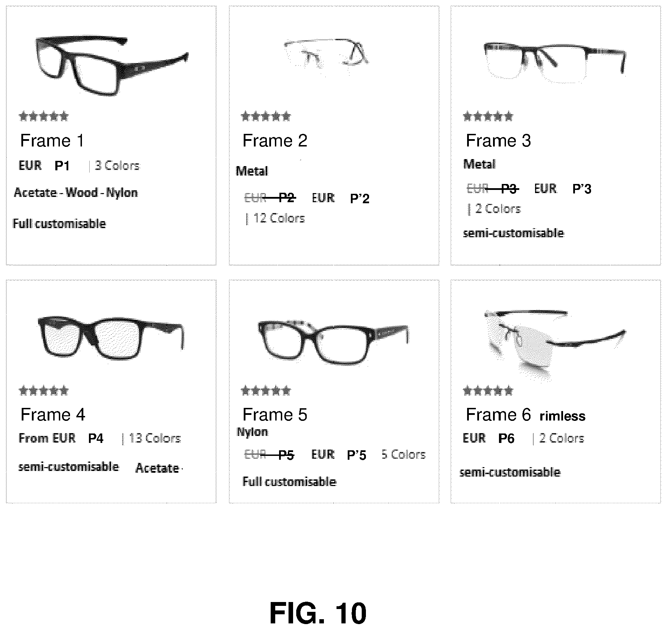

A non-limiting example of such a list is shown in Figure 10.

All the models in the list are consistent with constraints or possible modifications defined by the designer (material, color range, geometry...). The price range of the various eyeglasses frames is also presented.

The user then selects at least one design from the model list.

For each selected design, a customized 3D model is created:

$$O0 = F0(I0, I2)$$

Referring to Figure 10, a user selects one eyewear he/she prefers in the design database.

By way of non-limiting example, the user is a woman, who likes frames having a rectangle shape. She may select on the online platform the shape type "rectangle" (see Figure 9).

A list of rectangle shape eyeglasses frames is then provided. Next, the user may select the one she prefers: "Frame 4". For all the frames, the display contains a photo and possible changes in the simple information ("full customisable" means for instance that all geometrical parameters may be changed, while "semi customisable" means here that the 2D projection is kept identical).

Other information, such as the designer's name or the ranking (stars in Figure 10), may be displayed, the possible materials, the possible colors, etc.).

After selecting the "Frame 4", the user decides to modify the edge thickness, to increase the X-Y thickness so as to have a more visible frame, to change color/transparency for same reason, and to increase the face form angle / increase the pantoscopic angle, in order to have a more "sunglass" look.

The user also wants to modify the Z thickness of the frame, so that the lens edges are not visible (the frame Z thickness to be similar to the lens edge thickness). From the frame design database, the online platform provides the user with a range of values of possible X-Y thickness changes, and a range of permitted face form angle / pantoscopic angles, possible colors (here 3 colors available), as well as the possible Z thickness changes.

The user can change those parameters (thickness, face form angle, pantoscopic angle, color, transparency) via an online interface that proposes only possible changes and ranges of modification based on the frame design data. This may be in a form of +/- modification, or directly by inputting values (input 10).

The user may also input parameters linked to her prescription and lens properties (lens power, desired antireflective coating, high refractive index material for thin lens), and thus, the lens property (base curve, edge thickness) can be assessed.

When the user changes parameters, the online platform automatically modifies the initial frame design and proposed visualization of the modified frame to the user, here also with the lenses mounted on the frame. As an option, to help the user make his choice, it is possible to give the wearer a representation of the customized frame or a representation of his/her face with the selected frame (virtual try on) (output O0).

After such parameter modification, the user decides to order the eyeglasses.

At this step, all parameters of the final design of the frame are well defined and stored for example in a standard CAD format (IGES,STEP, STL) or in a specific format (XML, JSON...) that will be used for further manufacturing.

In the frame final design data:

- the non-modifiable (constant) parameters are provided:

  - frame name or reference,
  - material : acetate only,
  - 2D frame design in a pdf format,
  - 3D rim geometry (for lens fitting).

- the changeable parameters are assigned one single value (the one selected by the user):

  - X-Y edge thickness assigned for instance 2mm,
  - color assigned for instance Black instead of standard Blue,
  - opacity assigned instead of standard transparency property,
  - face form angle assigned 10°,
  - 3D geometry of the final frame in IGES format,
  - Z-thickness assigned to be similar to lens edge thickness.

The platform then automatically selects a manufacturer, depending on I1 i.e. a manufacturer able to manufacture the frame chosen (material, manufacturing period, delivery time, costs...):

$$O1 = F1(O0, I1)$$

In this example, manufacturers can provide an acetate frame in black color.

Depending on the equipment chosen by the user, the final cost is computed and proposed to the user.

The user may select the manufacturer, or the platform may automatically select it.

The manufacturer validates his ability to manufacture the equipment (frame and/or lens, if the lens could be mounted in the frame), for example in terms of raw materials availability, schedule, workload.

The equipment may be delivered by the manufacturer to the ordering entity (end user or ECP), or it may be delivered by the manufacturer to the platform that will be in charge to deliver the equipment to the ordering entity (end user or ECP).

Last, the platform will pay the frame designer and the eyewear manufacturer for the ordered equipment.

As shown in Figure 11, at the time the designer subscribes on the platform and uploads designs, each parameter of the frames may be declared by the designer as constant or variable in a specified or open range.

The designer is also able to add some constraints, such as constraints directed to material or to some labels, like the gender (female, male, unisex), or the expected price range. Such constraints may be related to the designer's personal perception of his design.

Manufacturers may also register on the platform and provide information regarding their production site locations and names, the type of production (frame, lens, remote edging), the manufacturing capabilities (type of material available, finishing, colors available, possible design, process constraints, accuracy, number of parts per batch, minimum and maximum quantities for delivery), manufacturing time and delivery.

All those data will be used for checking, according to the final representation of the eyeglasses frame or from the designer input data, whether the eyeglasses frame is compliant with the manufacturing data.

For example, if the designer's input about the eyeglasses frame material is "wood", only eyewear manufacturers having that kind of material will be selected.

Thus, the invention according to the disclosure makes it possible to obtain, as a result of customization, an eyeglasses frame that has a final general look not differing from the general look of the initial representation of the eyeglasses frame corresponding to the above-mentioned initial information obtained by the proposed method.

The method according to the invention is computer-implemented. Namely, a computer program product comprises one or more sequences of instructions that are accessible to a processor which may be the above-mentioned at least one processor and that, when executed by the processor, cause the processor to carry out steps of the method for providing an eyeglasses frame as described above.

The sequence(s) of instructions may be stored in one or several non-transitory information storage medium/media which may be computer-readable, such storage medium/media possibly including a predetermined location in a cloud.

The method according to the disclosure may be implemented in a calculation engine. Namely, the above-mentioned at least one processor comprises software and/or hardware making it possible, whatever the modification(s) requested by the user on any item or in any location or region or area of the frame, to automatically perform instantaneous recalculation of all the parameters and variables of the frame, including parameters the modification of which is not requested by the user, but which are modified as a consequence of the modification(s) requested by the user.

Although representative systems and methods have been described in detail herein, those skilled in the art will recognize that various substitutions and modifications may be made without departing from the scope of what is described and defined by the appended claims.

**Claims**

1.  A computer-implemented method for providing an eyeglasses frame, wherein it comprises steps of:

    (a) obtaining initial information relating to an initial representation of said eyeglasses frame;
    (b) obtaining at least one wearer parameter, taken in a group comprising:

    - morphological parameters related to a face of a predetermined wearer of said eyeglasses frame; and
    - preferred parameters provided by said wearer;

    (c) obtaining at least one eyeglasses frame parameter, taken in a group comprising:

    - parameters relating to geometry of said eyeglasses frame;
    - parameters relating to material of said eyeglasses frame; and
    - parameters relating to manufacturing techniques for manufacturing said eyeglasses frame;

    (d) obtaining, by at least one processor, a set of data relating to a 3D representation of said eyeglasses frame, from at least:

    - said initial information; and
    - said obtained at least one wearer parameter or at least one automatically modified wearer parameter; and
    - said obtained at least one eyeglasses frame parameter or at least one automatically modified eyeglasses frame parameter; and
    - at least one constraint or at least one automatically modified constraint, both relating to geometry of said eyeglasses frame;

    and automatically providing said 3D representation of said eyeglasses frame from said obtained set of data;
    (e) applying at least one evaluation criterion to said 3D representation of said eyeglasses frame, so as to determine whether said 3D representation of said eyeglasses frame satisfies said at least one constraint;
    (f) as long as said 3D representation of said eyeglasses frame does not satisfy at least one constraint among said at least one constraint and said at least one automatically modified constraint, iterating steps (d) and (e) with said at least one automatically modified wearer parameter and/or with said at least one automatically modified eyeglasses frame parameter and/or with said at least one automatically modified constraint, so as to automatically provide a constraint-compliant set of data relating to a 3D final representation of said eyeglasses frame.

2.  A method according to claim 1, wherein said evaluation criterion is related to a resemblance or deviation between said 3D final representation and said initial representation of said eyeglasses frame.

3.  A method according to claim 1 or 2, wherein it further comprises:
    (g) manufacturing said eyeglasses frame from said constraint-compliant set of data.

4.  A method according to any of the preceding claims, wherein, at step (d), said obtaining said set of data further takes into account at least one additional constraint relating to manufacturing techniques.

5.  A method according to any of the preceding claims, wherein said obtaining said initial information comprises retrieving said initial information from a database.

6.  A method according to any of the preceding claims, wherein said preferred parameters provided by said wearer are taken in a group comprising parameters relating to the general look, style, shape, material and color of said eyeglasses frame.

7.  A method according to any of the preceding claims, wherein, at step (e), said applying said evaluation criterion comprises comparing a 2D projection obtained from said initial information with a 2D projection of said 3D representation, so as to determine whether differences between both projections are below a predetermined threshold.

8. A method according to claim 7, wherein said comparing comprises obtaining differences between said compared 2D projections at at least one predetermined location of said compared 2D projections, or at at least one curvature in at least one predetermined region of interest of said compared 2D projections, or based on a derivate of said at least one curvature.

9. A method according to claim 8, wherein modifying said constraint relating to the geometry of said eyeglasses frame automatically modifies the comparing of said curvature depending on said predetermined regions of interest.

10. A method according to claim 8, in which said eyeglasses frame has a front face which has an internal contour and an external contour, wherein said predetermined location is on said compared respective internal and/or external contours of said respective front faces of said compared 2D projections.

11. A method according to any of claims 8 to 10, in which said eyeglasses frame has a front face which has an internal contour, an external contour and in which a new intermediate contour results from step (f), wherein said predetermined location is on said compared respective intermediate contours of said compared 2D projections.

12. A method according to any of claims 7 to 11, wherein said comparing further comprises assigning respective predetermined weights to predetermined locations of interest, said weights depending on said at least one constraint or said at least one automatically modified constraint or on said preferred parameters provided by said wearer and taking account of said weights when determining whether differences between both projections are below said predetermined threshold.

13. A method according to any of the preceding claims, wherein step (f) further comprises further modifying said eyeglasses frame upon request from a user.

14. A system for providing an eyeglasses frame, wherein it comprises:
    at least one processor configured for:

    (a) obtaining initial information relating to an initial representation of said eyeglasses frame;
    (b) obtaining at least one wearer parameter, taken in a group comprising:

        - morphological parameters related to a face of a predetermined wearer of said eyeglasses frame; and
        - preferred parameters provided by said wearer;

    (c) obtaining at least one eyeglasses frame parameter, taken in a group comprising:

        - parameters relating to geometry of said eyeglasses frame;
        - parameters relating to material of said eyeglasses frame; and
        - parameters relating to manufacturing techniques for manufacturing said eyeglasses frame;

    (d) obtaining, by said at least one processor, a set of data relating to a 3D representation of said eyeglasses frame, from at least:

        - said initial information; and
        - said obtained at least one wearer parameter or at least one automatically modified wearer parameter; and
        - said obtained at least one eyeglasses frame parameter or at least one automatically modified eyeglasses frame parameter; and
        - at least one constraint or at least one automatically modified constraint, both relating to geometry of said eyeglasses frame;

    and automatically providing said 3D representation of said eyeglasses frame from said obtained set of data;
    (e) applying at least one evaluation criterion to said 3D representation of said eyeglasses frame, so as to determine whether said 3D representation of said eyeglasses frame satisfies said at least one constraint;
    (f) as long as said 3D representation of said eyeglasses frame does not satisfy at least one constraint among said at least one constraint and said at least one automatically modified constraint, iterating steps (d) and (e) with said at least one automatically modified wearer parameter and/or with said at least one automatically modified eyeglasses frame parameter and/or with said at least one automatically modified constraint,

so as to automatically provide a constraint-compliant set of data relating to a 3D final representation of said eyeglasses frame.

15. A computer program product comprising one or more sequences of instructions that are accessible to a processor and that, when executed by said processor, cause said processor to:

   (a) obtain initial information relating to an initial representation of said eyeglasses frame;
   (b) obtain at least one wearer parameter, taken in a group comprising:

      - morphological parameters related to a face of a predetermined wearer of said eyeglasses frame; and
      - preferred parameters provided by said wearer;

   (c) obtain at least one eyeglasses frame parameter, taken in a group comprising:

      - parameters relating to geometry of said eyeglasses frame;
      - parameters relating to material of said eyeglasses frame; and
      - parameters relating to manufacturing techniques for manufacturing said eyeglasses frame;

   (d) obtain, by at least one processor, a set of data relating to a 3D representation of said eyeglasses frame, from at least:

      - said initial information; and
      - said obtained at least one wearer parameter or at least one automatically modified wearer parameter; and
      - said obtained at least one eyeglasses frame parameter or at least one automatically modified eyeglasses frame parameter; and
      - at least one constraint or at least one automatically modified constraint, both relating to geometry of said eyeglasses frame;

   and automatically provide said 3D representation of said eyeglasses frame from said obtained set of data;
   (e) apply at least one evaluation criterion to said 3D representation of said eyeglasses frame, so as to determine whether said 3D representation of said eyeglasses frame satisfies said at least one constraint;
   (f) as long as said 3D representation of said eyeglasses frame does not satisfy at least one constraint among said at least one constraint and said at least one automatically modified constraint, iterate steps (d) and (e) with said at least one automatically modified wearer parameter and/or with said at least one automatically modified eyeglasses frame parameter and/or with said at least one automatically modified constraint,

   so as to automatically provide a constraint-compliant set of data relating to a 3D final representation of said eyeglasses frame.

16. A non-transitory information storage medium, wherein it stores one or more sequences of instructions that are accessible to a processor and that, when executed by said processor, cause said processor to:

   (a) obtain initial information relating to an initial representation of said eyeglasses frame;
   (b) obtain at least one wearer parameter, taken in a group comprising:

      - morphological parameters related to a face of a predetermined wearer of said eyeglasses frame; and
      - preferred parameters provided by said wearer;

   (c) obtain at least one eyeglasses frame parameter, taken in a group comprising:

      - parameters relating to geometry of said eyeglasses frame;
      - parameters relating to material of said eyeglasses frame; and
      - parameters relating to manufacturing techniques for manufacturing said eyeglasses frame;

   (d) obtain, by at least one processor, a set of data relating to a 3D representation of said eyeglasses frame, from at least:

- said initial information; and
- said obtained at least one wearer parameter or at least one automatically modified wearer parameter; and
- said obtained at least one eyeglasses frame parameter or at least one automatically modified eyeglasses frame parameter; and
- at least one constraint or at least one automatically modified constraint, both relating to geometry of said eyeglasses frame;

and automatically provide said 3D representation of said eyeglasses frame from said obtained set of data;
(e) apply at least one evaluation criterion to said 3D representation of said eyeglasses frame, so as to determine whether said 3D representation of said eyeglasses frame satisfies said at least one constraint;
(f) as long as said 3D representation of said eyeglasses frame does not satisfy at least one constraint among said at least one constraint and said at least one automatically modified constraint, iterate steps (d) and (e) with said at least one automatically modified wearer parameter and/or with said at least one automatically modified eyeglasses frame parameter and/or with said at least one automatically modified constraint,

so as to automatically provide a constraint-compliant set of data relating to a 3D final representation of said eyeglasses frame.

**FIG. 1**

(a)

initial information

(b) Pw (c) Pf

constraint(s)

automatically obtain set of data...

(d)

...and automatically provide 3D representation of eyeglasses frame

automatically modify Pw and/or Pf and/or constraint(s)

automatically apply evaluation criterion:

(f)

no

3D representation is constraint-compliant?

(e)

yes

automatically provide constraint-compliant set of data

manufacture eyeglasses frame (g)

**FIG. 2**

**FIG. 3**

FIG. 4

FIG. 5

**FIG. 6**

**FIG. 7**

# FIG. 8

FRAME SHAPES

Aviator

Cat-eye

Oval

Rectangle

Round

Square

# FIG. 9

★★★★★
**Frame 1**
**EUR  P1**  | 3 Colors
**Acetate - Wood - Nylon**
**Full customisable**

★★★★★
**Frame 2**
**Metal**
~~EUR  P2~~  EUR  **P'2**
| 12 Colors

★★★★★
**Frame 3**
**Metal**
~~EUR  P3~~  EUR  **P'3**
| 2 Colors
**semi-customisable**

★★★★★
**Frame 4**
**From EUR  P4**  | 13 Colors
**semi-customisable    Acetate ·**

★★★★★
**Frame 5**
**Nylon**
~~EUR  P5~~  EUR  **P'5**  5 Colors
**Full customisable**

★★★★★
**Frame 6** **rimless**
**EUR  P6**  | 2 Colors
**semi-customisable**

# FIG. 10

Designer

O2
Feedback on design

I2
Design data

O0
Customized
frame

User
(ECP, wearer, other customer)

I0
Pw

Platform

O0 = F0(I0,I2)
O1 = F1(O0,I1)

O1
Constraint-compliant set of data
relating to final representation of frame

I1
Manufacturing data

Eyeglasses frame
manufacturers

Ophthalmic lens
manufacturers

FIG. 11

**Europäisches Patentamt**

**European Patent Office**

**Office européen des brevets**

# EUROPEAN SEARCH REPORT

Application Number

EP 20 30 5027

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2015/055085 A1 (FONTE TIMOTHY A [US] ET AL) 26 February 2015 (2015-02-26)<br>* figures 1A, 1B, 13 *<br>* paragraphs [0039], [0041] - [0047], [0051], [0097] - [0107] *<br>* paragraphs [0169] - [0176], [0186], [0191], [0203], [0249] * | 1,3-6,<br>13-16<br>2,7-12 | INV.<br>G02C13/00 |
| X<br>A | WO 2016/176630 A1 (OAKLEY INC [US])<br>3 November 2016 (2016-11-03)<br>* paragraphs [0044] - [0046], [0048], [0049], [0051], [0061], [0063], [0069] *<br>* paragraphs [0170], [0171] * | 1,5,6,<br>14-16<br>2-4,7-13 | |
| X<br>A | WO 01/32074 A1 (SOATTO STEFANO [US])<br>10 May 2001 (2001-05-10)<br>* page 2, line 5 - line 25 *<br>* page 3, line 2 - line 4 *<br>* page 3, line 14 - line 30 *<br>* page 13, line 11 - line 19 *<br>* page 18, line 2 - line 8 *<br>* claims 33-63 * | 1,3-5,<br>14-16<br>2,6-13 | |
| A | EP 1 011 006 A1 (HOYA CORP [JP])<br>21 June 2000 (2000-06-21)<br>* paragraphs [0024] - [0028], [0063]; figures 1, 2 * | 1-16 | TECHNICAL FIELDS SEARCHED (IPC)<br><br>G02C |

The present search report has been drawn up for all claims

| Place of search | Date of completion of the search | Examiner |
|---|---|---|
| Munich | 14 July 2020 | Vazquez Martinez, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 30 5027

This annex lists the patent family members relating to the patent documents cited in  the above-mentioned European search report.
The members are as contained in the European Patent Office EDP file on
The European Patent Office is in no way liable for these particulars which are merely given for the purpose of information.

14-07-2020

| Patent document cited in search report | Publication date | Patent family member(s) | Publication date |
|---|---|---|---|
| US 2015055085 A1 | 26-02-2015 | AU 2014308590 A1 | 03-03-2016 |
| | | AU 2016208357 A1 | 11-08-2016 |
| | | CA 2921938 A1 | 26-02-2015 |
| | | CN 105637512 A | 01-06-2016 |
| | | CN 108537628 A | 14-09-2018 |
| | | EP 3036701 A1 | 29-06-2016 |
| | | JP 6099232 B2 | 22-03-2017 |
| | | JP 6542744 B2 | 10-07-2019 |
| | | JP 2016537716 A | 01-12-2016 |
| | | JP 2017041281 A | 23-02-2017 |
| | | KR 20160070744 A | 20-06-2016 |
| | | KR 20180009391 A | 26-01-2018 |
| | | US 2015055085 A1 | 26-02-2015 |
| | | US 2015055086 A1 | 26-02-2015 |
| | | US 2015154322 A1 | 04-06-2015 |
| | | US 2015154678 A1 | 04-06-2015 |
| | | US 2015154679 A1 | 04-06-2015 |
| | | US 2015212343 A1 | 30-07-2015 |
| | | US 2016062151 A1 | 03-03-2016 |
| | | US 2016062152 A1 | 03-03-2016 |
| | | US 2017068121 A1 | 09-03-2017 |
| | | US 2017269385 A1 | 21-09-2017 |
| | | US 2018299704 A1 | 18-10-2018 |
| | | US 2019146246 A1 | 16-05-2019 |
| | | WO 2015027196 A1 | 26-02-2015 |
| WO 2016176630 A1 | 03-11-2016 | CN 208569223 U | 01-03-2019 |
| | | EP 3289406 A1 | 07-03-2018 |
| | | US 2018017815 A1 | 18-01-2018 |
| | | US 2018067340 A1 | 08-03-2018 |
| | | WO 2016176630 A1 | 03-11-2016 |
| WO 0132074 A1 | 10-05-2001 | AU 1459801 A | 14-05-2001 |
| | | US 6944327 B1 | 13-09-2005 |
| | | WO 0132074 A1 | 10-05-2001 |
| EP 1011006 A1 | 21-06-2000 | AU 753161 B2 | 10-10-2002 |
| | | CN 1264474 A | 23-08-2000 |
| | | EP 1011006 A1 | 21-06-2000 |
| | | HK 1027168 A1 | 11-07-2008 |
| | | JP 3537831 B2 | 14-06-2004 |
| | | KR 20010012590 A | 15-02-2001 |
| | | TW 362161 B | 21-06-1999 |
| | | US 6533418 B1 | 18-03-2003 |
| | | US 2003090625 A1 | 15-05-2003 |
| | | WO 9852092 A1 | 19-11-1998 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 20 30 5027

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2020

| Patent document cited in search report | Publication date | Patent family member(s) | Publication date |
|---|---|---|---|
| --------------------------------------------------------------------------------- | | | |

EPO FORM P0459

For more details about this annex : see Official Journal of the European Patent Office, No. 12/82